# EUROPEAN PATENT SPECIFICATION

(11) **EP 3 033 174 B1**
(45) Date of publication and mention of the grant of the patent: **02.11.2022**
(21) Application number: 14745143.9
(22) Date of filing: 31.07.2014
(51) Int. Cl.: B01J 37/04, B01J 21/06, B01J 21/18, B01J 35/00, B82Y 30/00, C09C 1/36, C08L 1/12, C08K 3/012, C08K 3/22, C08K 9/04

(54) **PROCESS FOR MANUFACTURING A PRODUCT CONTAINING A CATALYTICALLY ACTIVE TITANIUM COMPOUND**
VERFAHREN ZUR HERSTELLUNG EINES PRODUKTS, DAS EINE KATALYTISCH AKTIVE TITANVERBINDUNG ENTHÄLT
PROCÉDÉ DE FABRICATION D'UN PRODUIT CONTENANT UN COMPOSÉ EN TITANE ACTIF PAR CATALYSE

(30) Priority: 12.08.2013 EP 13180138
(43) Date of publication of application: 22.06.2016
(73) Proprietor: Cerdia International GmbH, 4052 Basel (CH)
(72) Inventor: HÖLTER, Dirk, 79312 Emmendingen (DE); STEIN, Armin, 79341 Kenzingen (DE)
(74) Representative: Trinks, Ole
(86) International application number: PCT/EP2014/066529
(87) International publication number: WO 2015/022201

(56) References cited:
- EP-A1- 0 716 117
- GB-A- 2 288 605
- US-A- 5 647 383
- US-A1- 2012 325 233

## Description

This application claims priority to European application No. 13180138 3.

The present invention relates to a process for the manufacture of a product containing a photocatalytically active titanium compound.

Products containing catalytically active titanium compounds have been proposed to provide improved degradability of substrates such as cellulose acetate used as filter tow; see WO 2010/017989 in the name of the Applicant or EP-A-0 716 117.

The present invention now makes available an improved manufacturing process of a product containing a photocatalytically active titanium compound.

The invention concerns in consequence a process as defined in claim 1.

It has been found, surprisingly, that the process according to the invention allows to strongly reduce the formation of undesired by-products, in particular from the autocondensation of solvent, while retaining desired catalytic activity of titanium compounds, e.g. for accelerating photocatalytic degradation of substrates such as biobased polymers.

"Catalytically active titanium compound" is understood to denote in particular a titanium compound which is capable of accelerating reactions such as for example cleavage of organic compounds such as in particular biobased polymers. The particular class of catalytically active titanium compounds used are photocatalytically active titanium compounds in particular titanium dioxide photocatalysts, is significantly catalytically active in presence of radiation such as visible light or UV light. TiO2 pigments containing coatings reducing the photocatalytical activity are no photocatalytically active titanium compounds in the sense of this invention. Preferred catalytically titanium compounds are nano-structured.

"Nano-structured" is understood to denote that the titanium compound consists or consists essentially of optionally agglomerated crystallites having an average particle size of from 1 to 150 nm, preferably from 1 to 100 nm, and more preferably from 5 to 30 nm.

Optionally modified nano-structured titanium dioxide is particularly preferred as catalytically active titanium compound.

In a first specific embodiment, the catalytically active titanium compound is a nano-structured titanium oxide comprising one or two types of titanium oxide, in particular rutile and/or anatase.

In a second specific embodiment, the catalytically active titanium compound is a nano-structured titanium oxide modified with additional elements such as carbon, nitrogen, sulfur, fluorine, iodine, aluminum, bismuth, iron, cobalt, vanadium, chromium, nickel, manganese, tungsten, molybdenum, tantalum, niobium, silver, gold or platinum. Carbon-modified nano-structured titanium oxide, such as disclosed in WO-A-2010/017989 in the name of the Applicant and iron modified titanium dioxide as disclosed in WO-A-2012/139726 are preferred.

When carbon-doped titanium dioxide is used, the crystallite size of the carbon-doped titanium dioxide can be from 5 to 150 nm, especially from 7 to 25 nm. In an individual case, it may be advantageous or even necessary to grind a conventional commercial coarse-particle carbon-modified titanium dioxide in order to adjust the optimal grain size.

Often, the carbon-modified titanium dioxide has a density (ISO 787, Part 10) of 3.0 to 5.0 g/cm³ especially of 3.5 to 4.2 g/cm³. The carbon-modified titanium oxide has preferably a specific surface area BET of greater than 100 m2/g, especially greater than 250 m2/g. Often, this specific surface area is equal to or lower than 1000 m2/g. Preferably, the carbon-modified titanium dioxide is characterised by a significant light absorption compared to pure titanium dioxide in the range of [λ]>=400 nm.

The carbon-modified titanium dioxide preferably contains carbon in a quantity of 0.05 to 5 % by weight, especially from 0.3 to 1.5 % by weight.

In the process according to the invention, the solvent is selected from ketones, having a C-H bond in α-position to the carbonyl function. A C3-C6 ketone, in particular acetone, is more particularly preferred.

In one aspect, the inhibitor is the solvent which is comprised in the liquid phase. In another aspect, the solvent which is comprised in the liquid phase is different from the inhibitor.

In a first particular aspect of the process according to the invention, the inhibitor comprises a carboxylic acid. Hydroxycarboxylic acids are preferred inhibitors. More particularly, an inhibitor selected from glycolic acid, lactic acid, malic acid, citric acid, tartaric acid, glyceric acid, hydracrylic acid, hydroxybutyric acid, mandelic acid or a combination thereof is preferred.

In a second particular aspect of the process according to the invention, the inhibitor comprises a polyol. . More particularly, an inhibitor selected from ethylene glycol, glycerol, propylene glycol, butanediol, pentaerythritol sugar alcohols or a combination thereof is preferred.

In the process according to the invention, the substrate is an optionally modified biopolymer. Preferably, the substrate is an acylated polysaccharide such as acylated starch or, in particular, acylated cellulose.

When a cellulose ester is used as the substrate, cellulose acetate, cellulose propionate, cellulose butyrate, cellulose acetate propionate and/or cellulose acetate butyrate are preferred. Cellulose acetate is particularly preferred.

When a cellulose ester is used as the substrate, the average degree of substitution (DS) is preferably from 1.5 to 3.0, especially from 2.2 to 2.7, this especially being the case with the cellulose acetate. The optimal average degree of polymerisation in the cellulose ester is from 150 to 500, especially from 180 to 280.

In the process according to the invention, the amount of acid used as inhibitor is generally from 0.5 to 50 % weight relative to the weight of catalytically active titanium compound. Preferably this amount is from 1 to 20 % weight.

In the process according to the invention, the amount of alcohol used as inhibitor is generally from 0.5 to 1000 % weight relative to the weight of catalytically active titanium compound. Preferably this amount is from 1 to 100 % weight.

Generally, the liquid phase contains up to 4 % weight of inhibitor and catalytically active titanium compound relative to the weight of the liquid phase. Preferably this amount is from 0.2-1 % weight.

In the process according to the invention, the concentration of substrate is generally from 10 to 50 % weight, preferably from 20 to 35 % weight, relative to the total weight of the liquid phase.

In the process according to the invention, the concentration of solvent is generally from 49 to 89 % weight, preferably from 64 to 79 % weight, relative to the total weight of the liquid phase.

In particular aspects, the liquid phase contains up to 2 % weight relative to the total weight of the liquid phase of additional additives such as stabilizers, colorants or pigments.

In a second particular aspect, the liquid comprises up to 10 % of softeners.

The process according to the invention is usually carried out at a temperature from 50 to 65°C.

The liquid phase can be suitably processed by extrusion through a die to form films or filaments of substrate.

In a particular aspect, the process according to the invention comprises (a) providing a liquid phase comprising catalytically active titanium compound, solvent and inhibitor and (b) adding the liquid phase obtained in step (a) to a second liquid phase comprising the substrate and solvent and optionally (c) extruding liquid phase obtained in step (b) through a die to form films or preferably filaments of product containing substrate, catalytically active titanium compound and inhibitor.

In another particular aspect, the process according to the invention comprises (a) providing a liquid phase comprising catalytically active titanium compound, solvent, inhibitor and a first quantity of substrate and (b) adding at least a portion of the liquid phase obtained in step (a) to a second liquid phase comprising a second quantity of substrate and solvent and optionally (c) extruding liquid phase obtained in step (b) through a die to form films or preferably filaments of product containing substrate, catalytically active titanium compound and inhibitor. "First quantity" intends to denote an amount from 0.1 to 10 % weight, preferably from 1 to 9 % weight, and most preferably from 2 to 7 % weight of substrate relative to the total weight of the liquid phase obtained in step a).

The product obtainable according to the invention generally contains from 50 to 100000 ppm/wt, preferably from 100 to 2000 ppm/wt of inhibitor.

The product obtainable according to the invention generally contains less than 1000 ppm/wt, preferably less than 300 ppm/wt, more preferably less than 200 ppm/wt of autocondensation product of solvent, in particular diacetone alcohol. The product obtainable according to the invention generally contains more than 1 ppm/wt of autocondensation product of solvent, in particular diacetone alcohol.

The product obtainable according to the invention generally contains less than 10000 ppm/wt, preferably less than 5000 ppm/wt of solvent, in particular acetone. The product obtainable according to the invention generally contains more than 10 ppm/wt of solvent, in particular acetone.

The content of catalytically active titanium compound, in particular, carbon-modified titanium in the product obtainable according to the invention is generally from 0.1 to 5 % by weight, especially to 0.3 to 1.5 % by weight.

The product obtainable according to the invention may be transformed into moulded bodies, such as fibres, films, especially deep-drawn films, above all for use as packaging materials, for injection-moulded articles, thick-walled moulded bodies, granulates, microbeads, beads and vessels. The further processing of these fibres into filter tows is especially advantageous, with which filter rods and filter plugs made therefrom for filter cigarettes are produced. Filter plugs containing a catalytically active titanium compound, which are found in the environment, are degraded significantly faster with the action of light than those, which do not contain a catalytically active titanium compound. The moulded bodies such as fibres, films, especially deep-drawn films, packaging materials, injection-moulded articles, granulates, microbeads, beads, vessels, and, in particular, filter plugs, have a strongly reduced content of undesired by-products, in particular from the autocondensation of solvent, while retaining desired catalytic activity of titanium compounds, e.g. for accelerating degradation of the products.

The examples hereinafter are intended to illustrate the invention without however limiting it.

### Examples

### Example 1 (reference)

200 ml of acetone and 5 % weight of a carbon modified TiO2 photocatalyst were mixed in a lightproof flask. The resulting suspension was stirred at 200 rpm at ambient temperature.

### Example 2

0.5 % weight of propandiol were added to a mixture of 200 ml of acetone and 5 % weight of a carbon modified TiO2 photocatalyst in a lightproof flask. The resulting suspension was stirred at 200 rpm at ambient temperature.

### Example 3

0.5 % weight of glycerol were added to a mixture of 200 ml of acetone and 5 % weight of a carbon modified TiO2 photocatalyst in a lightproof flask. The resulting suspension was stirred at 200 rpm at ambient temperature.

### Example 4

0.5 % weight of lactic acid were added to a mixture of 200 ml of acetone and 5 % weight of a carbon modified TiO2 photocatalyst in a lightproof flask. The resulting suspension was stirred at 200 rpm at ambient temperature.

### Example 5

0.5 % weight of citric acid were added to a mixture of 200 ml of acetone and 5 % weight of a carbon modified TiO2 photocatalyst in a lightproof flask. The resulting suspension was stirred at 200 rpm at ambient temperature.

### Example 6

5 % weight of a carbon modified titanium dioxide were mixed with 3 % weight cellulose acetate, 0.5 % weight glycerol and remainder acetone. The resulting suspension was grinded using a pearl mill (WAB Dynomill Multilab, 1,4 l).

26 parts by weight of a cellulose acetate with a DS of 2.45 were dissolved in 74 parts by weight of a solvent mixture of acetone/water 96:4. To this mixture 5.2 % weight of the titanium dioxide suspension were added.

The resulting spinning dope was homogenized and subsequently filtrated.

Fibres with 3.0 denier filaments were produced from this spinning dope by dry spinning procedure.

### Example 7

5 % weight of a carbon modified titanium dioxide were mixed with 3 % weight cellulose acetate, 0.5 % weight lactic acid and the remainder acetone. The resulting suspension was grinded using a pearl mill (WAB Dynomill Multilab, 1,4 1).

26 parts by weight of a cellulose acetate with a DS of 2.45 were dissolved in 74 parts by weight of a solvent mixture of acetone/water 96:4. To this mixture 5.2 % weight of the titanium dioxide suspension were added.

The resulting spinning dope was homogenized and subsequently filtrated.

Fibres with 3.0 denier filaments were produced from this spinning dope by dry spinning procedure.

From examples 1 to 5 a sample was taken after 22 hours, filtrated and analyzed by gas chromatography.

The filter tow from example 6 was extracted with ethanol and the extract analyzed by gas chromatography.

The results are summarized in Table 1.

**Table 1**

| Example | mg diacetone alcohol/l acetone | mg diacetone alcohol/kg fibres |
|---|---|---|
| 1 | 2280 | |
| 2 | 55 | |
| 3 | 1 | |
| 4 | 11 | |
| 5 | 2 | |
| 6 | | 60 |
| 7 | | 25 |

## Claims

1. Process for the manufacture of a product containing a photocatalytically active titanium compound, which comprises at least one step wherein the photocatalytically active titanium compound is contacted with a biopolymer in a liquid phase comprising a solvent having a carbonyl function and a C-H bond in α-position to said carbonyl function, and an inhibitor selected from one or more acids and one or more alcohols or mixtures thereof, wherein the solvent is a ketone and the inhibitor comprises a carboxylic acid or a polyol.

2. Process according to claim 1,
wherein the photocatalytically active titanium compound is a nano-structured titanium compound which consists essentially of optionally agglomerated crystallites having an average particle size of from 1 to 150 nm, preferably a nano-structured titanium dioxide.

3. Process according to claim 1 or 2;
wherein the photocatalytically active titanium compound is a carbon-modified titanium dioxide.

4. Process according to anyone of claims 1 to 3,
wherein the solvent is acetone.

5. Process according to anyone of claims 1 to 4,
wherein the inhibitor comprises hydroxycarboxylic acid.

6. Process according to claim 5,
wherein the inhibitor comprises citric acid.

7. Process according to anyone of claims 1 to 6,
wherein the inhibitor comprises glycerol.

8. Process according to anyone of claims 1 to 7,
wherein the biopolymer is an acylated polysaccharide.

9. Process according to anyone of claims 1 to 8, which comprises
(a) providing a liquid phase comprising photocatalytically active titanium compound, solvent and inhibitor and optionally a first quantity of biopolymer and (b) adding the liquid phase obtained in step (a) to a second liquid phase comprising a second quantity of biopolymer and solvent.

10. Process according to claim 9,
wherein the first quantity of biopolymer is from 0.1 to 10 % weight, preferably from 1 to 9 % weight, and most preferably from 2 to 7 % weight of biopolymer relative to the total weight of the liquid phase obtained in step (a).

11. Process according to anyone of claims 1 to 10,
wherein the amount of acid used as inhibitor is from 0.5 to 50 % weight relative to the weight of photocatalytically active titanium compound, preferably from 1 to 20 % weight or wherein the amount of alcohol used as inhibitor is from 0.5 to 1000 % weight relative to the weight of photocatalytically active titanium compound, preferably from 1 to 100 % weight.

12. Process according to anyone of claims 1 to 11,
wherein the concentration of biopolymer is from 10 to 50 % weight, preferably from 20 to 35 weight, relative to the total weight of the liquid phase.

## Patentansprüche

1. Verfahren zur Herstellung eines Produkts, das eine photokatalytisch aktive Titanverbindung enthält, das mindestens einen Schritt aufweist, bei dem die photokatalytisch aktive Titanverbindung mit einem Biopolymer in einer flüssigen Phase in Kontakt gebracht wird, die ein Lösungsmittel mit einer Carbonylfunktion und einer C-H-Bindung in α-Position zu dieser Carbonylfunktion und einen Inhibitor aufweist, der aus einer oder mehreren Säuren und einem oder mehreren Alkoholen oder Gemischen davon ausgewählt ist, wobei das Lösungsmittel ein Keton ist und der Inhibitor eine Carbonsäure oder ein Polyol aufweist.

2. Verfahren nach Anspruch 1,
wobei die photokatalytisch aktive Titanverbindung eine nanostrukturierte Titanverbindung ist, die im Wesentlichen aus wahlweise agglomerierten Kristalliten mit einer mittleren Teilchengröße von 1 bis 150 nm besteht, vorzugsweise ein nanostrukturiertes Titandioxid.

3. Verfahren nach Anspruch 1 oder 2,
wobei die photokatalytisch aktive Titanverbindung ein Kohlenstoffmodifiziertes Titandioxid ist.

4. Verfahren nach einem der Ansprüche 1 bis 3,
wobei das Lösungsmittel Aceton ist.

5. Verfahren nach einem der Ansprüche 1 bis 4,
wobei der Inhibitor Hydroxycarbonsäure aufweist.

6. Verfahren nach Anspruch 5,
worin der Inhibitor Zitronensäure aufweist.

7. Verfahren nach einem der Ansprüche 1 bis 6,
wobei der Inhibitor Glycerin aufweist.

8. Verfahren nach einem der Ansprüche 1 bis 7,
wobei das Biopolymer ein acyliertes Polysaccharid ist.

9. Verfahren nach einem der Ansprüche 1 bis 8, welches Folgendes aufweist:
(a) Bereitstellen einer flüssigen Phase, die eine photokatalytisch aktive Titanverbindung, ein Lösungsmittel und einen Inhibitor und wahlweise eine erste Menge eines Biopolymers aufweist, und (b) Hinzufügen der in Schritt (a) erhaltenen flüssigen Phase zu einer zweiten flüssigen Phase, die eine zweite Menge an Biopolymer und Lösungsmittel aufweist.

10. Verfahren nach Anspruch 9,
wobei die erste Menge des Biopolymers 0,1 bis 10 Gew.-%, vorzugsweise 1 bis 9 Gew.-%, und am bevorzugtesten 2 bis 7 Gew.-% des Biopolymers, bezogen auf das Gesamtgewicht der in Schritt (a) erhaltenen flüssigen Phase, ausmacht.

11. Verfahren nach einem der Ansprüche 1 bis 10,
wobei die Menge der als Inhibitor verwendeten Säure 0,5 bis 50 Gew.-%, vorzugsweise 1 bis 20 Gew.-%, bezogen auf das Gewicht der photokatalytisch aktiven Titanverbindung beträgt, oder wobei die Menge des als Inhibitor verwendeten Alkohols 0,5 bis 1000 Gew.-%, vorzugsweise 1 bis 100 Gew.-%, bezogen auf das Gewicht der photokatalytisch aktiven Titanverbindung beträgt.

12. Verfahren nach einem der Ansprüche 1 bis 11,
wobei die Konzentration des Biopolymers 10 bis 50 Gew.-%, vorzugsweise 20 bis 35 Gew.-%, bezogen auf das Gesamtgewicht der flüssigen Phase beträgt.

## Revendications

1. Procédé de fabrication d'un produit contenant un composé de titane actif par photocatalyse, qui comprend au moins une étape dans laquelle le composé de titane actif par photocatalyse est mis en contact avec un biopolymère dans une phase liquide comprenant un solvant ayant une fonction carbonyle et une liaison C-H dans une position α à ladite fonction carbonyle, et un inhibiteur sélectionné parmi un ou plusieurs acides et un ou plusieurs alcools ou des mélanges de ceux-ci, dans lequel le solvant est un cétone et l'inhibiteur comprend un acide carboxylique ou un polyol.

2. Procédé selon la revendication 1,
dans lequel le composé de titane actif par photocatalyse est un composé de titane nanostructuré qui est composé essentiellement de cristallites agglomérées en option ayant une taille particulaire moyenne allant de 1 à 150 nm, de préférence un dioxyde de titane nanostructuré.

3. Procédé selon la revendication 1 ou 2,
dans lequel le composé de titane actif par photocatalyse est un dioxyde de titane modifié au carbone.

4. Procédé selon l'une quelconque des revendications 1 à 3,
dans lequel le solvant est un acétone.

5. Procédé selon l'une quelconque des revendications 1 à 4,
dans lequel l'inhibiteur comprend un acide hydroxycarboxylique.

6. Procédé selon la revendication 5,
dans lequel l'inhibiteur comprend un acide citrique.

7. Procédé selon l'une quelconque des revendications 1 à 6,
dans lequel l'inhibiteur comprend un glycérol.

8. Procédé selon l'une quelconque des revendications 1 à 7,
dans lequel le biopolymère est un polysaccharide acylé.

9. Procédé selon l'une quelconque des revendications 1 à 8, qui comprend les étapes consistant à (a) fournir une phase liquide comprenant un composé de titane actif par photocatalyse, un solvant et un inhibiteur et en option une première quantité de biopolymère et (b) ajouter la phase liquide obtenue dans l'étape (a) à une seconde phase liquide comprenant une seconde quantité de biopolymère et un solvant.

10. Procédé selon la revendication 9,
dans lequel la première quantité de biopolymère est de 0,1 à 10 % en poids, de préférence de 1 à 9 % en poids, et de toute préférence de 2 à 7 % en poids de biopolymère relativement au poids total de la phase liquide obtenue dans l'étape (a).

11. Procédé selon l'une quelconque des revendications 1 à 10,
dans lequel la quantité d'acide utilisé comme inhibiteur est de 0,5 à 50 % en poids relativement au poids de composé de titane actif par photocatalyse, de préférence de 1 à 20 % en poids ou dans lequel la quantité d'alcool utilisé comme inhibiteur est de 0,5 à 1 000 % en poids relativement au poids de composé de titane actif par photocatalyse, de préférence de 1 à 100 % en poids.

12. Procédé selon l'une quelconque des revendications 1 à 11,
dans lequel la concentration de biopolymère est de 10 à 50 % en poids, de préférence de 20 à 35 % en poids, relativement au poids total de la phase liquide.
